# EUROPÄISCHE PATENTSCHRIFT

(11) **EP 0 703 478 B1**
(45) Veröffentlichungstag und Bekanntmachung des Hinweises auf die Patenterteilung: **11.12.2002**
(21) Anmeldenummer: 95114294.2
(22) Anmeldetag: 12.09.1995
(51) Int. Cl.: G02B 6/44

(54) **Verfahren zur Herstellung eines optischen Kabels aus einem Metallrohr**
Method of manufacture of an optical cable from a metal tube
Procédé de fabrication d'un câble optique d'un tuyau métallique

(30) Priorität: 24.09.1994 DE 4434133
(43) Veröffentlichungstag der Anmeldung: 27.03.1996
(73) Patentinhaber: Alcatel Kabel AG & Co., 30179 Hannover (DE)
(72) Erfinder: Ziemek, Gerhard, Dr.-Ing., D-30853 Langenhagen (DE); Staschewski, Harry, D-30853 Langenhagen (DE); Porcher, Klaus, D-31275 Lehrte (DE)
(74) Vertreter: Döring, Roger, Dipl.-Ing.

(56) Entgegenhaltungen:
- EP-A- 0 235 753
- EP-A- 0 299 123
- EP-A- 0 456 836
- DE-A- 3 910 122
- FR-A- 2 547 067

## Beschreibung

Die Erfindung betrifft ein Verfahren zur Herstellung eines optischen Kabels bestehend aus einem Metallrohr, in welchem zumindest ein Lichtwellenleiter angeordnet ist nach dem Oberbegriff des Anspruchs 1 sowie eine Vorrichtung zur Herstellung eines optischen Kabels nach dem Oberbegriff des Anspruchs 8.

Ein wesentliches Problem bei der Herstellung derartiger optischer Kabel besteht darin, auf wirtschaftliche Weise eine Überlänge der Lichtwellenleiter in dem Kabel zu erzeugen. Diese Überlänge ist wegen der stark unterschiedlichen thermischen Ausdehnungskoeffizienten der Werkstoffe Metall und Glas notwendig. Sie darf nicht zu gering sein, damit im Falle einer Erwärmung des Metallröhrchens eine mechanische Beanspruchung des Lichtwellenleiters unterbleibt. Auf der anderen Seite darf die Überlänge des Lichtwellenleiters nicht zu groß sein, da bei niedrigen Temperaturen eine unzulässige Stauchung des Lichtwellenleiters auftreten könnte, was zu einer Dämpfungserhöhung führt. Der Lichtwellenleiter muß also eine Reservelänge aufweisen, die beiden Aspekten Rechnung trägt, so daß in keinem Fall unzulässige Beanspruchungszustände entstehen.

Bei einem Verfahren nach der EP 0 299 123 B1 wird die Überlänge dadurch hergestellt, daß die Lichtwellenleiter mittels einer Schubvorrichtung in das noch offene Schlitzrohr mit größerer Geschwindigkeit als das Schlitzrohr eingeführt werden. Nach einer Alternative werden die Lichtwellenleiter mittels eines Einfüllrohres bis in den Bereich der Abzugsscheibe geführt und dort mittels einer Gasströmung auf die Außenfläche des Metallrohres geblasen.

Bei einem in der EP 0 456 836 A1 beschriebenen Verfahren wird das mit dem oder den Lichtwellenleitern versehene geschweißte Metallrohr zwischen einer Ziehvorrichtung (Ziehmatrize) und einem Haspel, auf den das Metallrohr aufgespult wird, unter Zugspannung gesetzt und dadurch elastisch gedehnt. Die Zugspannung nimmt von Windung zu Windung auf dem Haspel ab.

Beiden Verfahren ist gemeinsam, daß eine exakt einstellbare Überlänge der Lichtweilenleiter in dem Metallröhrchen nicht möglich ist.

Der Erfindung liegt von daher die Aufgabe zugrunde, das eingangs erwähnte Verfahren dahingehend zu verbessern, daß Lichtwellenleiterkabel der beschriebenen Art hergestellt werden können, bei welchem die Überlänge mit hoher Genauigkeit eingestellt werden kann.

Diese Aufgabe wird gemäß Anspruch 1 dadurch gelöst, daß an dem Rohr vor und hinter dem Punkt, an dem das Rohr im Durchmesser reduziert wird, je ein das Rohr in Fertigungsrichtung transportierender Spannbackenabzug angreift und das geschweißte Rohr zwischen dem in Fertigungsrichtung gesehen zweiten Spannbackenabzug und der Abzugsscheibe elastisch verformt wird, wobei das Maß der elastischen Verformung durch eine Kraft geregelt wird, die das geschweißte Rohr zwischen dem in Fertigungsrichtung gesehen zweiten Spannzangenabzug und der Abzugsscheibe aus der Fertigungsrichtung auslenkt.

Anspruch 8 definiert eine erfindungsgemäße Vorrichtung zur Durchführung des Verfahrens nach Anspruch 1.

Mit Hilfe der Erfindung ist es in überraschend einfacher Weise gelungen, eine genau einstellbare Überlänge der Lichtwellenleiter in dem Metallrohr zu erzeugen. Die Kraft, durch welche die elastische Verformung erzeugt wird, kann aus den Werkstoffeigenschaften sowie den geometrischen Abmessungen des Metallrohres berechnet oder empirisch ermittelt werden. Dadurch, daß das Metallrohr zumindest mit einer Windung um die Abzugsscheibe herumgeführt ist, entsteht für den Lichtwellenleiter ein Festpunkt innerhalb des Metallrohres und zwar an einem Punkt hinter dem Auftreffpunkt des Metallrohres auf die Abzugsscheibe. Der Festpunkt für das Metallrohr liegt auf der Abzugsscheibe an dem Auftreffpunkt des Metallrohres auf die Abzugsscheibe. Hinter diesem Festpunkt wird die elastische Verformung allmählich aufgehoben, wobei sich die Überlänge ergibt.

Wesentlich für die Erfindung ist, daß zwischen der Windung bzw. den Windungen des Metallrohres und der Oberfläche der Abzugsscheibe eine genügend große Reibkraft auftrifft. Dies wird in einfacher Weise dadurch erreicht, daß an dem Metallrohr hinter der Abzugsscheibe eine Kraft angreift, die für ein Aufliegen der Windung bzw. der Windungen des Metallrohres auf der Mantelfläche der Abzugsscheibe sorgt. Im allgemeinen reicht hierfür die von einer Aufwickeltrommel für das fertige Kabel aufgebrachte mittels einer Regelvorrichtung geregelte Zugkraft aus.

Das Reduzieren des Metallrohrdurchmessers erfolgt zweckmäßigerweise mit einer Ziehmatrize. Für Rohre mit den in Rede stehenden geometrischen Abmessungen ist dies die eleganteste Methode. Die Ziehmatrize bestimmt letztendlich den Außendurchmesser des fertigen Kabels. Der Durchmesser des geschweißten Rohres kann in bestimmten Grenzen frei gewählt werden. Das heißt, daß beispielweise innerhalb eines bestimmten Bereiches für z. B. sowohl sechs als auch bis zu zwanzig Lichtwellenleiter ein Metallrohr mit einem gleichen Durchmesser hergestellt wird, welches zu einem Fertigrohr durch Auswechseln der Ziehmatrize mit dem gewünschten Durchmesser reduziert wird.

Gemäß der Lehre der Erfindung greift an dem Rohr vor und hinter dem Punkt, an dem das Rohr im Durchmesser reduziert wird, je ein das Rohr in Fertigungsrichtung transportierender Spannbackenabzug an. Ein derartiger Spannbackenabzug ist Gegenstand der DBP 1 164 355.

Beide Spannbackenabzüge umfassen das geschweißte Metallrohr fest. Daraus resultiert, daß das geschweißte Rohr zwischen dem in Fertigungsrichtung gesehen zweiten Spannbackenabzug und der Abzugsscheibe elastisch verformt wird.

Das Maß der elastischen Verformung wird durch eine Kraft geregelt, die das geschweißte Metallrohr zwischen dem in Fertigungsrichtung gesehen zweiten Spannbackenabzug und der Abzugsscheibe aus der Fertigungsrichtung auslenkt. In der einfachsten Ausführung wird ein Gewicht an das Rohr angehängt.

Das geschweißte Metallrohr liegt mit wenigstens drei Windungen auf der Umfangsfläche der Abzugsscheibe auf. Dadurch kann die Kraft die hinter der Abzugsscheibe an dem Rohr angreift, soweit verringert werden, daß dadurch eine nennenswerte elastische Verformung hinter der Abzugsscheibe an dem Metallrohr nicht mehr auftritt.

Für das Verschweißen der Längsnaht sind nahezu alle Löt- oder Schweißverfahren geeignet. Als besonders vorteilhaft hat sich jedoch das Laserschweißen erwiesen, da mit diesem Verfahren große Längen verschweißt werden können.

Gerade für das Laserschweißen ist es unumgänglich, daß die Schweißnaht möglichst exakt zum Laserstrahl ausgerichtet ist. Aus diesem Grunde ist es vorteilhaft, daß das Rohr durch den ersten Spannbackenabzug verdrehungssicher unter dem Schweißpunkt geführt wird.

Wenn, wie es nach einer weiteren Ausgestaltung der Erfindung vorgesehen ist, die Kraft für die Reduzierung des Rohrdurchmessers durch den zweiten Spannbackenabzug aufgebracht wird, wird das Rohr zwischen diesem Spannbackenabzug und der Abzugsscheibe gedehnt. Der Spannbackenabzug bildet dabei einen exakten Festpunkt. Eine Regelung der Geschwindigkeit des zweiten Spannbackenabzugs in Bezug auf den ersten Spannbackenabzug wird dabei mittels des Durchhanges des Rohres zwischen dem ersten Spannbackenabzug und dem zweiten Spannbackenabzug vorgenommen.

Die Erfindung betrifft ebenfalls eine Vorrichtung zur Herstellung eines optischen Kabels wie sie im Oberbegriff des Anspruchs 11 beschrieben und in der EP 0 299 123 B1 offenbart ist. Von dieser Vorrichtung unterscheidet sich die erfindungsgemäße Vorrichtung dadurch, daß zwischen der Schweißeinrichtung und der Rohrreduziereinrichtung ein erster Spannbackenabzug sowie zwischen der Rohrreduziereinrichtung und der Abzugsscheibe ein zweiter Spannbackenabzug an dem geschweißten Rohr angreift.

Bei der erfindungsgemäßen Vorrichtung werden die Kräfte zum Abziehen des Metallbandes von der Vorratsspule, die bei der Verformung des Metallbandes auftretenden Kräfte sowie sonstige Reibungskräfte von dem ersten Spannbackenabzug und die bei der Rohrreduzierung aufzubringenden Verformungskraft von dem zweiten Spannbackenabzug aufgebracht. Damit hat die Abzugsscheibe lediglich die Kraft für die elastische Verformung des Metallrohres aufzubringen, die relativ gering ist. Eine Verformung des Rohrquerschnitts zu einem Oval ist mit Sicherheit ausgeschlossen.

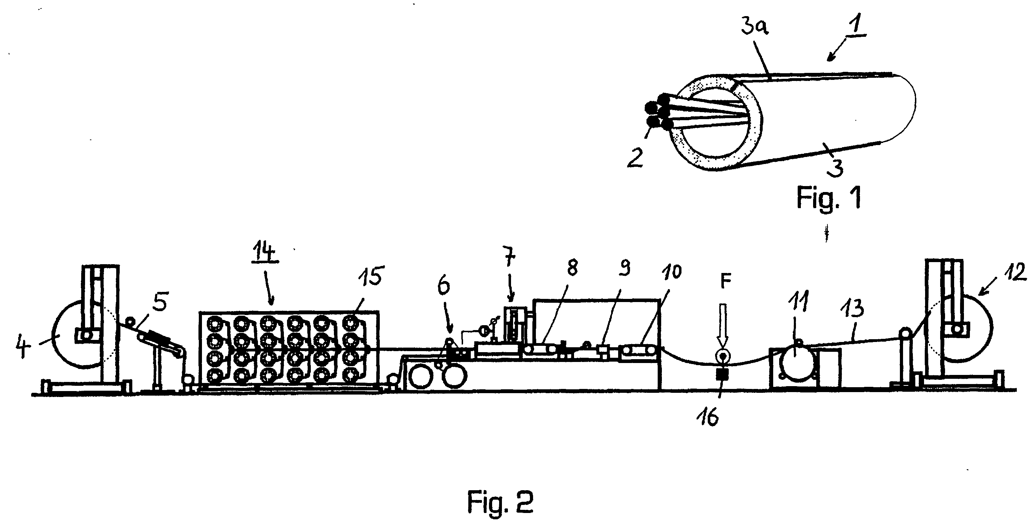

Die Erfindung ist an Hand der in den Figuren 1 und 2 schematisch dargestellten Ausführungsbeispielen näher erläutert.

Die Fig. 1 zeigt eine perspektivische Ansicht eines Teils eines nach der Lehre der Erfindung hergestellten optischen Kabels. Das optische Kabel 1 besteht aus den Lichtwellenleitern 2 und dem die Lichtwellenleiter 2 umgebenden Metallrohr 3, welches eine Längsschweißnaht 3a aufweist. Der Freiraum zwischen den Lichtwellenleitern 2 und dem Metallrohr 3 kann mit einem sogenannten Petroleumjelly ausgefüllt sein, um eine Längswasserwanderung zu verhindern. Die Anzahl der Lichtwellenleiter 2 liegt üblicherweise zwischen sechs und zwanzig kann jedoch bis zu 40 betragen. Die Lichtwellenleiter 2 haben eine größere Länge als das Metallrohr 3, verlaufen also wellen-, wendel- oder sinusförmig in dem Metallrohr 3. Die Überlänge beträgt normalerweise in etwa 3 ‰. Die Wanddicke S des Metallrohres beträgt z. B. 0,2 mm während sein Außendurchmesser 3,5 mm beträgt. Dies sind typische Daten für ein optisches Kabel, welches an Stelle eines Drahtes in einem Leitungsseil angeordnet wird. Als Material für das Metallrohr 3 wird Edelstahl bevorzugt.

Die Figur 2 zeigt eine seitliche Ansicht der erfindungsgemäßen Vorrichtung.

Von einer Vorratsspule 4 wird ein Band 5 kontinuierlich abgezogen und einer Formvorrichtung 6 zugeführt, in der das Band 5 zu einem Rohr mit Längsschlitz geformt wird. Teil dieser Formvorrichtung 6 ist eine nicht näher bezeichnete Besäumeinrichtung, in welcher das Band 5 exakt auf die benötigte Breite geschnitten wird. Die Formeinrichtung 6 besteht weiterhin aus mehreren nicht näher bezeichneten Formrollensätzen. Der Längsschlitz des geformten Rohres wird mittels einer Laserschweißeinrichtung 7 geschlossen. Für die exakte Führung des geschlitzten Rohres unterhalb der Schweißeinrichtung 7 sorgt ein erster Spannbackenabzug 8, der aus einer Vielzahl das Rohr umfassender Spannbackenpaare besteht, die über eine endlose Kette angetrieben sind. Hinter dem ersten Spannbackenabzug 8 ist eine Rohrreduziereinrichtung 9 z. B. eine Ziehmatrize angeordnet, in welcher der Durchmesser des Rohres verringert wird. Ein zweiter Spannbackenabzug 10 ist hinter der Rohrreduziereinrichtung 9 angeordnet, der an dem gezogenen Rohr angreift und dieses durch die Ziehmatrize zieht. Die Abzugsgeschwindigkeit des zweiten Spannbackenabzuges 10 ist gegenüber der Abzugsgeschwindigkeit des ersten Spannbackenabzugs 8 in Abhängigkeit vom Durchhang des Rohres zwischen der Ziehmatrize und dem ersten Spannbackenabzug 8 geregelt. Hinter dem zweiten Spannbackenabzug 10 befindet sich eine angetriebene Abzugsscheibe 11 auf deren Umfangsfläche das Rohr mit mehreren Windungen aufliegt. Die Abzugsscheibe 11 ist mit einer Abzugsgeschwindigkeit angetrieben, welche gleich der Abzugsgeschwindigkeit des zweiten Spannbackenabzugs 10 ist. Hinter der Abzugsscheibe 11 ist ein Aufwickler 12 vorgesehen, der das Rohr 13 mit leichtem Zug aufwickelt.

Mit 14 ist eine Ablaufvorrichtung für eine Vielzahl von Lichtwellenleitern 2 bezeichnet, die mit einer Vielzahl von Spulen 15 bestückt ist, auf welche die Lichtwellenleiter 2 aufgewickelt sind.

Die Lichtwellenleiter 2 werden von den Spulen 15 abgezogen und in das noch offene Rohr vor der Schweißeinrichtung eingeführt. Als Schutz für die empfindlichen Lichtwellenleiter 2 ragt ein nicht dargestelltes ortsfestes Metallröhrchen in das Schlitzrohr, durch dessen Inneres die Lichtwellenleiter 2 hindurchgeleitet werden. Das Metallröhrchen gibt die Lichtwellenleiter 2 frühestens hinter der Schweißeinrichtung 7 frei. Das Metallröhrchen ist in konzentrischer Anordnung von einem weiteren Metallröhrchen umgeben. Durch den von den beiden konzentrischen Metallröhrchen gebildeten Ringspalt wird unter Druck ein Petroleumjelly in das Rohr eingefüllt. Damit die Lichtwellenleiter 2 in dem Metallrohr 3 mit einer Überlänge vorliegen, wird das Metallrohr 3 kontinuierlich zwischen dem zweiten Spannbackenabzug 10, dessen Spannbackenpaare das Metallrohr 3 fest umgreifen und die durch die Rohrreduzierung entstehenden Verformungskräfte aufbringen, und der Abzugsscheibe 11 elastisch verformt, d. h. gedehnt. Dadurch wird auf die Abzugsscheibe 11 eine gleichgroße Länge von Metallrohr 3 und Lichtwellenleiter 2 aufgewickelt. Auf der Abzugsscheibe 11 "entspannt" sich der Zustand der elastischen Verformung, das Metallrohr 3 verkürzt sich auf den normalen Zustand.

Die elastische Verformung wird durch eine Kraft F bewirkt, die das Metallrohr 3 zwischen den zweiten Spannbackenabzug 10 und der Abzugsscheibe 11 auslenkt. Dies wird durch ein Gewicht 16 erreicht, welches an das Metallrohr 3 z. B. mittels einer nicht dargestellten Rolle angehängt ist. Die Kraft F, d. h. das Gewicht 16 bestimmt das Maß der Auslenkung und damit das Maß der Dehnung.

Bei einer vorgegebenen Geometrie und der Materialauswahl für das Metallrohr 3 kann durch Auswahl des Gewichtes 16 eine exakte Überlänge der Lichtwellenleiter 2 in dem Rohr 3 erzeugt werden.

## Patentansprüche

1. Verfahren zur Herstellung eines optischen Kabels bestehend aus einem Metallrohr, in welchem zumindest ein Lichtwellenleiter angeordnet ist, bei welchem ein von einer Vorratsspule abgezogenes Metallband allmählich zu einem Schlitzrohr geformt wird, der von einer weiteren Vorratsspule abgezogene Lichtwellenleiter in das noch offene Schlitzrohr eingeführt, der Längsschlitz des Schlitzrohres verschweißt, das geschweißte Rohr in seinem Außendurchmesser reduziert und das Metallband, der Lichtwellenleiter und das geschweißte Rohr durch eine Abzugsscheibe transportiert werden, wobei das geschweißte und im Außendurchmesser reduzierte Rohr zumindest mit einer Windung um die Abzugsscheibe herumgeführt und die Kraft, mit welcher die Abzugsscheibe an dem geschweißten Rohr angreift, eine elastische Verformung des Rohres von 1 bis 6 ‰ bewirkt und die elastische Verformung des Rohres auf der Abzugsscheibe aufgehoben wird, **dadurch gekennzeichnet, daß** an dem Rohr vor und hinter dem Punkt, an dem das Rohr im Durchmesser reduziert wird, je ein das Rohr in Fertigungsrichtung transportierender Spannbackenabzug angreift und das geschweißte Rohr zwischen dem in Fertigungsrichtung gesehen zweiten Spannbackenabzug und der Abzugsscheibe elastisch verformt wird, wobei das Maß der elastischen Verformung durch eine Kraft geregelt wird, die das geschweißte Rohr zwischen dem in Fertigungsrichtung gesehen zweiten Spannzangenabzug und der Abzugsscheibe aus der Fertigungsrichtung auslenkt.

2. Verfahren nach Anspruch 1, **dadurch gekennzeichnet, daß** das geschweißte Rohr mittels einer Ziehmatrize in seinem Außendurchmesser reduziert wird.

3. Verfahren nach einem der Ansprüche 1 oder 2, **dadurch gekennzeichnet, daß** hinter der Abzugsscheibe eine Kraft an dem Rohr angreift, welche die Windungen des Rohres in Kontakt mit der Umfangsfläche der Abzugsscheibe hält.

4. Verfahren nach einem der Ansprüche 1 bis 3, **dadurch gekennzeichnet, daß** das geschweißte Rohr mit zumindest drei Windungen auf der Umfangsfläche der Abzugsscheibe aufliegt.

5. Verfahren nach einem der Ansprüche 1 bis 4, **dadurch gekennzeichnet, daß** die Längsnaht des Rohres mittels eines Lasers verschweißt wird.

6. Verfahren nach einem der Ansprüche 1 bis 3, **dadurch gekennzeichnet, daß** das Rohr durch den ersten Spannzangenabzug verdrehsicher unter dem Schweißpunkt geführt wird.

7. Verfohren nach einem der Ansprüche 1 bis 6, **dadurch gekennzeichnet, daß** die Kraft für die Reduzierung des Außendurchmessers des geschweißten Rohres durch den zweiten Spannzangenabzug aufgebracht wird.

8. Vorrichtung zur Herstellung eines optischen Kabels bestehend aus einem Metallrohr, in welchem zumindest ein Lichtwellenleiter angeordnet ist, bestehend aus einer ein Metallband kontinuierlich zu einen Schlitzrohr formenden Einrichtung, einer Schweißeinrichtung, einer hinter der Schweißeinrichtung befindlichen Rohrreduziereinrichtung sowie einer Abzugsscheibe, **dadurch gekennzeichnet, daß** zwischen der Schweißeinrichtung (7) und der Rohrreduziereinrichtung (9) ein erster Spannzangenabzug (8) sowie zwischen der Rohrreduziereinrichtung (9) und der Abzugsscheibe (11) ein zweiter Spannbackenabzug (10) vorhanden ist, der an dem geschweißten Rohr (3) angreift, wobei das geschweißte Rohr zwischen dem in Fertigungsrichtung gesehen zweiten Spannbackenabzug und der Abzugsscheibe elastisch verformt wird, sowie eine Vorrichtung, die das Maß der elastischen Verformung durch eine Kraft regelt, die das geschweißte Rohr zwischen dem in Fertigungsrichtung gesehen zweiten Spannzangenabzug und der Abzugsscheibe aus der Fertigungsrichtung auslenkt.

## Claims

1. A procedure for manufacturing an optical cable, consisting of a metal tube, in which at least one optical fiber is located, wherein a metal band drawn from a supply coil is gradually formed into a slotted tube, the optical fiber is drawn from another supply coil and inserted into the open slotted tube, the longitudinal slit of the slotted tube is welded, the welded tube's outside diameter is reduced, and the metal band, the optical fiber, and the welded tube is transported by a pulley disk, wherein the welded tube, the outside diameter of which has been reduced, is led around the pulley disk at least one turn, and the force that the pulley disk exerts on the welded tube causes an elastic deformation of the tube by 1 to 6‰, and wherein the elastic deformation of the tube is cancelled out on the pulley disk, **characterized in that** before and after the point where the diameter of the tube is reduced one clamp capstan each pulls on the tube, transporting the tube in manufacturing direction, wherein the welded tube is elastically deformed between the second clamp capstan in manufacturing direction and the pulley disk, wherein the extend of the elastic deformation is determined by a force that displaces the welded tube from the manufacturing direction between the second clamp capstan in manufacturing direction and the pulley disk.

2. A procedure according to claim 1 **characterized in that** the outer diameter of the welded tube is reduced by a drawing die.

3. A procedure according to one of the claims 1 or 2 **characterized in that** a force is applied to the tube behind the pulley disk that keeps the windings of the tube in contact with the circumference surface of the pulley disk.

4. A procedure according to one of the claims 1 to 3 **characterized in that** the welded tube is in contact with the circumference surface of the pulley disk for at least three windings.

5. A procedure according to one of the claims 1 to 4 **characterized in that** the longitudinal seam of the tube is welded by a laser.

6. A procedure according to one of the claims 1 to 3 **characterized in that** the first clamp capstan guides the tube under the weld point twist-free.

7. A procedure according to one of the claims 1 to 6 **characterized in that** the force for reducing the outer diameter of the welded tube is exerted by the second clamp capstan.

8. A device for manufacturing an optical cable, consisting of a metal tube in which at least one optical fiber is inserted, comprising a device that continuously forms a metal band into a slotted tube, a welding device, a tube reduction device behind the welding device and a pulley disk **characterized in that** there is a first clamp capstan (8) between the welding device (7) and the tube reduction device (9) and a second clamp capstan (10) between the tube reduction device (10) and the pulley disk (11) that grips the welded tube (3), wherein the welded tube is elastically deformed between the second clamp capstan in manufacturing direction and the pulley disk, wherein the extend of the elastic deformation is determined by a force that displaces the welded tube from the manufacturing direction between the second clamp capstan in manufacturing direction and the pulley disk.

## Revendications

1. Procédé pour la confection d'un câble optique composé d'un tube métallique dans lequel est disposé au moins une fibre optique et au cours duquel une bande métallique dévidée d'une bobine de réserve est progressivement formée en un tube fendu, une fibre optique dévidée d'une autre bobine de réserve est introduite dans le tube fendu encore ouvert, la soudure longitudinale du tube fendu est soudée, le diamètre extérieur du tube soudé est rétréci et la bande métallique, la fibre optique et le tube soudé sont transportés par un disque de tirage, le tube soudé au diamètre rétréci ayant au moins une spire autour du disque de tirage et la force appliquée par le disque de tirage sur le tube soudé résultant en une déformation élastique de 1 à 6 % et la déformation élastique étant annulée sur le disque de tirage, **caractérisé par le fait que** deux dispositifs de tirage à mâchoires de serrage saisissent le tube, l'un avant et l'autre après le point où le diamètre du tube est rétréci, le transportant dans le sens de la fabrication, et que le tube subit une déformation élastique entre le deuxième de ces dispositifs, vu dans le sens de la fabrication, la valeur de la déformation élastique étant régulée par une force qui fait dévier du sens de la fabrication le tube soudé entre le deuxième dispositif, vu dans le sens de la fabrication, et le disque de tirage.

2. Procédé selon la revendication 1, **caractérisé par le fait que** le diamètre extérieur d'un tube soudé est rétréci à l'aide d'une matrice d'étirage.

3. Procédé selon une des revendications 1 ou 2, **caractérisé par le fait que** après le disque de tirage, une force agit sur le tube, assurant que les spires du tube touchent la surface circonférentielle du disque de tirage.

4. Procédé selon une des revendications 1 à 3, **caractérisé par le fait que** le tube soudé repose avec au moins trois spires sur la surface circonférentielle du disque de tirage.

5. Procédé selon une des revendications 1 à 4, **caractérisé par le fait que** la soudure longitudinale du tube est soudée au laser.

6. Procédé selon une des revendications 1 à 5, **caractérisé par le fait que** le tube est guidé sous le point de soudage par le premier dispositif de tirage à mâchoires de serrage sans pouvoir tourner.

7. Procédé selon une des revendications 1 à 6, **caractérisé par le fait que** la force nécessaire au rétrécissement du diamètre extérieur du tube soudé est appliquée par le deuxième dispositif de tirage à mâchoires de serrage.

8. Procédé pour la confection d'un câble optique composé d'un tube métallique dans lequel est disposé au moins une fibre optique, composé d'un dispositif formant une bande métallique en continu en un tube fendu, d'un dispositif de soudage, d'un dispositif de rétrécissement du tube situé après le dispositif de soudage ainsi que d'un disque de tirage, **caractérisé par le fait qu'**un premier dispositif de tirage à mâchoires de serrage (8) est présent entre le dispositif de soudage (7) et le dispositif de rétrécissement du tube (9) et un deuxième dispositif de tirage (10) entre le dispositif de rétrécissement du tube (9) et le disque de tirage (11), le deuxième dispositif saisissant le tube soudé (3), le tube soudé subit une déformation élastique entre le deuxième dispositif et le disque de tirage, et un dispositif, qui régle la valeur de la deformation par une force, qui fait dévier du sens de la fabrication le tube soudé entre le deuxième dispositif et le disque de tirage, vu dans le sens de la fabrication.
